# EUROPEAN PATENT APPLICATION

(11) **EP 2 241 931 A2**
(43) Date of publication of application: **20.10.2010**
(21) Application number: 10157676.7
(22) Date of filing: 25.03.2010
(51) Int. Cl.: G02F 1/13357

(54) **Light Source Module, Backlight Unit and Display Apparatus**

(30) Priority: 14.04.2009 KR 20090032280
(71) Applicant: Samsung Electronics Co., Ltd., Suwon-si, Gyeonggi-do 442-742 (KR)
(72) Inventor: KIM, Tae-sung, Suwon-si (KR); KANG, Jeong-il, Suwon-si (KR); CHOI, Hyeong-sik, Hwaseong-si (KR); CHANG, Gil-yong, Suwon-si (KR); CHOI, Young-deok, Seoul (KR)
(74) Representative: Waddington, Richard

(57) **Abstract**

A display apparatus having a display and a backlight unit (BLU) which provides backlight to the display are provided. The BLU includes a first light source module in which a plurality of light sources are arranged, a second light source module in which a plurality of light sources are arranged, and a light source driving unit which drives the first light source module and second light source module. The first light source module and second light source module are connected to each other by a first connector.

## Description

### BACKGROUND OF THE INVENTION

### 1. Field

Apparatuses consistent with exemplary embodiments relate to a display apparatus, and more particularly, to a display apparatus which displays broadcast contents or other video contents so that a user may view the displayed contents.

### 2. Description of the Related Art

Liquid crystal displays (LCDs) are one of the most common display types available. Because LCDs are not capable of emitting light by themselves, LCD panels include backlight units (BLUs) to project backlight onto LCDs.

BLUs comprise light sources which emit backlight, and driving elements which drive the light sources. Light sources are arranged to efficiently project backlight onto LCDs, and a plurality of driving elements are required to smoothly drive the light sources.

Recently, LCDs are gradually becoming larger. This seems to be desirable and necessary, but a change in design of BLUs resulting from large-sized LCDs causes inconveniences to developers. Therefore, there is a need for methods to more easily change the design of BLUs.

Additionally, there is also a need for methods to reduce manufacturing costs of BLUs increased due to large-sized LCDs.

### SUMMARY

Exemplary embodiments may overcome the above disadvantages and other disadvantages not described above. Also, the exemplary embodiments are not required to overcome the disadvantages described above, and an exemplary embodiment may not overcome any of the problems described above.

Exemplary embodiments provide a light source module, a backlight unit (BLU) and a display apparatus, which enable easy change of a design of the BLU.

Exemplary embodiments also provide a light source module, a BLU and a display apparatus, which could reduce the manufacturing costs of the BLU so as to reduce the total manufacturing costs of the display apparatus.

According to the present invention there is provided an apparatus and method as set forth in the appended claims. Other features of the invention will be apparent from the dependent claims, and the description which follows.

According to an aspect an exemplary embodiment, there is provided a display apparatus including a display which displays a video, and a BLU which provides backlight to the display. The BLU may include a first light source module which includes a plurality of light sources, a second light source module which includes a plurality of light sources, a light source driving unit which drives the first light source module and second light source module, and a first connector through which the first light source module and second light source module are connectable.

The first connector may be detachably connected to the first light source module and the second light source module.

The plurality of light sources in the first light source module are connected in series to the plurality of light sources in the second light source module by the first connector.

A terminal on a first end of the first light source module may be connected to the light source driving unit, a terminal on a second end of the first light source module may be connected to a first end of the second light source module via the first connector, and a terminal on a second end of the second light source module may be short-circuited, so that the plurality of light sources in the first light source module may be connected in series to the plurality of light sources in the second light source module.

The display apparatus may further include a second connector which short-circuits terminals. The second connector may be connected to the second end of the second light source module, to short-circuit the terminal on the second end of the second light source module.

The display apparatus may further include a third light source module in which a plurality of light sources are arranged, a fourth light source module in which a plurality of light sources are arranged, a fifth light source module in which a plurality of light sources are arranged, and a sixth light source module in which a plurality of light sources are arranged, wherein the third light source module and fourth light source module are connected to each other by a third connector, and the fifth light source module and sixth light source module are connected to each other by a fourth connector.

A part of the first connector, third connector and fourth connector may be a linear type connector, and the other part may be a non-linear type connector.

The first to sixth light source modules may be disposed outside the display apparatus.

The display apparatus may further include a seventh light source module in which a plurality of light sources are arranged. The second light source module and seventh light source module may be connected to each other by a fifth connector.

The plurality of light sources may comprise white light sources.

According to an aspect of another exemplary embodiment, there is provided a BLU including a first light source module which includes a plurality of light sources, a second light source module which includes a plurality of light sources, a light source driving unit which drives the first light source module and the second light source module, and a first connector through which the first light source module and second light source module are connectable.

According to an aspect of another exemplary embodiment, there is provided a light source module including a plurality of light sources, a first terminal which is disposed on a first end of the light source module and is connectable to one of at least two external elements, and a second terminal which is disposed on a second end of the light source module and is connectable the other on of at least two external elements. In this situation, the external elements may be one of an element for driving the light source module, another light source module, or a connector.

### BRIEF DESCRIPTION OF THE DRAWINGS

The above and/or other aspects will be more apparent by describing certain exemplary embodiments with reference to the accompanying drawings, in which:

FIG. 1 is a block diagram of an LCD television (TV) to which an exemplary embodiment is applicable;

FIG. 2 is a view illustrating in more detail a backlight unit (BLU) shown in FIG. 1 of an exemplary embodiment;

FIG. 3 is a view illustrating a type of a BLU of another exemplary embodiment;

FIG. 4 is a view illustrating a type of a BLU of another exemplary embodiment;

FIG. 5 is a view illustrating an example of a light emitting diode (LED) module according to an exemplary embodiment;

FIG. 6 is a view explaining a process of using only a single LED module which is not connected to any other LED module;

FIG. 7 is a view illustrating a type of a BLU of another exemplary embodiment; and

FIG. 8 is a view illustrating a display panel on which the BLU shown in FIG. 7 is disposed.

### DETAILED DESCRIPTION OF EXEMPLARY EMBODIMENTS

Certain exemplary embodiments will now be described in greater detail with reference to the accompanying drawings.

In the following description, like reference numerals refer to like elements, even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

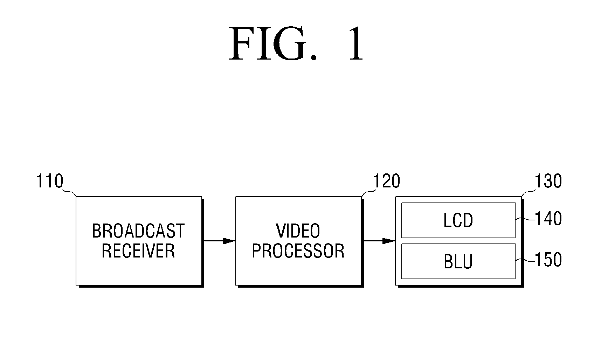

FIG. 1 is a block diagram of an LCD TV to which an exemplary embodiment is applicable. The LCD TV of FIG. 1 includes a broadcast receiver 110, a video processor 120 and an LCD panel 130.

The broadcast receiver 110 receives broadcast content from a broadcast station, a satellite or an external input device, via wire or wirelessly, and demodulates the received broadcast content.

The video processor 120 performs signal processing, such as video decoding, video scaling or frame rate conversion (FRC), with respect to the broadcast content output from the broadcast receiver 110.

The LCD panel 130 comprises an LCD 140 and a BLU 150. The LCD 140 displays the broadcast content processed by the video processor 120.

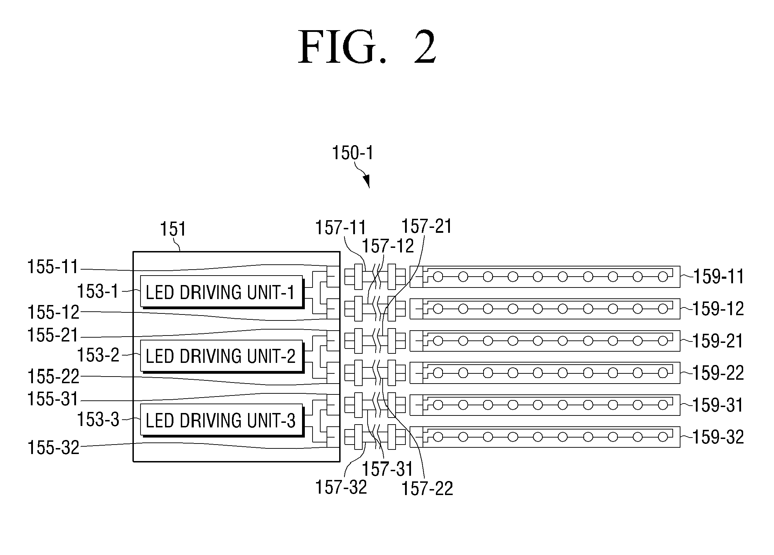

The BLU 150 projects a backlight onto the LCD 140 because the LCD 140 is not able to emit light by itself. Hereinafter, the BLU 150 is described in detail with reference to FIG. 2.

FIG. 2 illustrates in more detail an exemplary configuration of a BLU 150-1 shown in FIG. 1. In FIG. 2, the BLU 150 comprises a light emitting diode (LED) driving board 151, three LED driving units 153-1, 153-2, 153-3, six driving terminals 155-11, 155-12, 155-21, 155-22, 155-31, 155-32, six connection cables 157-11, 157-12, 157-21, 157-22, 157-31, 157-32, and six LED modules 159-11, 159-12, 159-21, 159-22, 159-31, 159-32.

The six LED modules 159-11, 159-12, 159-21, 159-22, 159-31, 159-32 are light modules for emitting backlight supplied to the LCD 140. Referring to FIG. 2, each of the six LED modules comprises ten LEDs which are connected and modularized. In more detail, ten LEDs in a single LED module are connected to each other in series.

While ten LEDs are modularized in a single LED module in this exemplary embodiment, this is merely exemplary. Accordingly, there is no limitation to the number of LEDs modularized in a single LED module.

The LED driving board 151 includes the three LED driving units 153-1, 153-2, 153-3, and the six driving terminals 155-11, 155-12, 155-21, 155-22, 155-31, 155-32. Additionally, the LED driving board 151 requires electronic wirings, which are formed to connect the three LED driving units 153-1, 153-2, 153-3 to the six driving terminals 155-11, 155-12, 155-21, 155-22, 155-31, 155-32.

As shown in FIG. 2, the LED driving unit-1 153-1 is electrically connected to the driving terminal 155-11 and the driving terminal 155-12 by the electronic wirings formed on the LED driving board 151. The LED driving unit-2 153-2 is electrically connected to the driving terminal 155-21 and the driving terminal 155-22 by the electronic wirings formed on the LED driving board 151. The LED driving unit-3 153-3 is electrically connected to the driving terminal 155-31 and the driving terminal 155-32 by the electronic wirings formed on the LED driving board 151.

The six connection cables 157-11, 157-12, 157-21, 157-22, 157-31, 157-32 electrically connect the six driving terminals 155-11, 155-12, 155-21, 155-22, 155-31, 155-32 to the six LED modules 159-11, 159-12, 159-21, 159-22, 159-31, 159-32. In other words, the LED modules 159-11, 159-12, 159-21, 159-22, 159-31, 159-32 are connected to the LED driving units 153-1, 153-2, 153-3.

The LED driving unit-1 153-1 drives the LED module 159-11 and LED module 159-12. The electronic wirings formed on the LED driving board 151 function as connectors to enable LEDs contained in the LED module 159-11 to be connected in series to LEDs contained in the LED module 159-12. Accordingly, the LED driving unit-1 153-1 may drive the LED module 159-11 and the LED module 159-12 in series.

Likewise, the LED driving unit-2 153-2 may drive the LED module 159-21 and the LED module 159-22 in series, and the LED driving unit-3 153-3 may drive the LED module 159-31 and the LED module 159-32 in series.

As described above, a single LED driving unit drives two LED modules in this exemplary embodiment, but this is merely exemplary. In other words, it is possible to reduce the number of LED modules driven by a single LED driving unit. For example, a single LED driving unit may drive three or more LED modules.

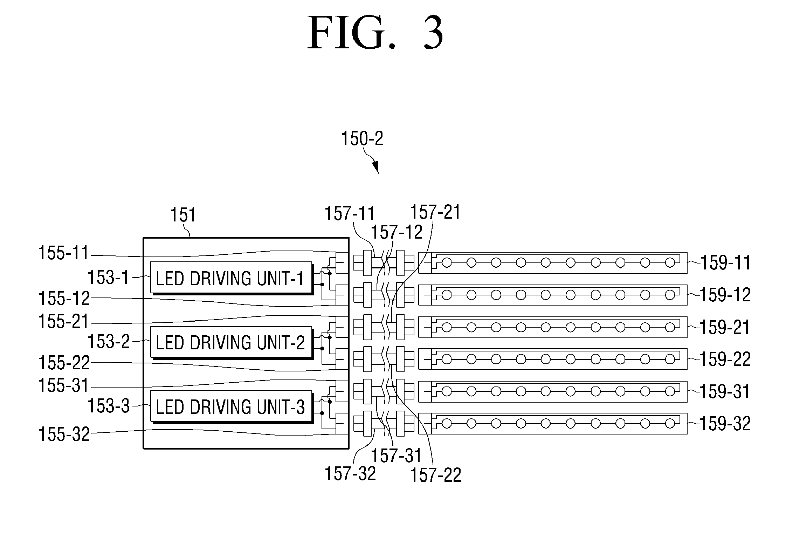

FIG. 3 exemplarily illustrates a type of a BLU 150-2 that is different from the BLU 150-1 shown in FIG. 2. The BLU 150-2 of FIG. 3 has substantially the same configuration as the BLU 150-1 of FIG. 2. However, electronic wirings formed on an LED driving board 151 of the BLU 150-2 shown in FIG. 3 are different from those formed on the LED driving board 151 of the BLU 150-1 shown in FIG. 2.

As shown in FIG. 3, the electronic wirings formed on the LED driving board 151 of the BLU 150 function as connectors that enable LEDs in the LED module 159-11 to be connected in parallel to LEDs in the LED module 159-12. Accordingly, the LED driving unit-1 153-1 may drive the LED module 159-11 and LED module 159-12 in parallel.

Likewise, the LED driving unit-2 153-2 may drive the LED module 159-21 and LED module 159-22 in parallel, and the LED driving unit-3 153-3 may drive the LED module 159-31 and LED module 159-32 in parallel.

In other words, in the BLU 150-2 shown in FIG. 3, a single LED driving unit drives two LED modules "in parallel", whereas in the BLU 150-1 shown in FIG. 2, a single LED driving unit drives two LED modules "in series". Thus, the BLU 150-2 of FIG. 3 differs from the BLU 150-1 of FIG. 2.

In this exemplary embodiment, a single LED driving unit drives two LED modules in parallel, but this is merely exemplary. Accordingly, it is possible for a single LED driving unit to drive three or more LED modules in parallel to reduce the number of LED driving units required.

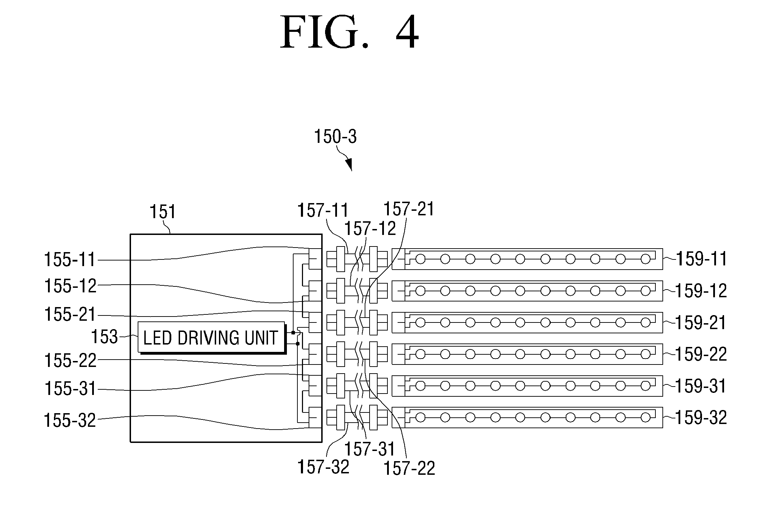

FIG. 4 exemplarily illustrates a type of a BLU 150 that is different from the BLUs 150-1 and 150-2 shown in FIGS. 2 and 3. The BLU 150-3 of FIG. 4 has substantially the same configuration as the BLUs 150-1 and 150-2 shown in FIGS. 2 and 3.

However, the BLU 150-3 of FIG. 4 comprises only a single LED driving unit, whereas each of the BLUs 150-1 and 150-2 of FIGS. 2 and 3 comprises three LED driving units. Thus, the BLU-3 150 of FIG. 4 differs from the BLUs 150-1 and 150-2 of FIGS. 2 and 3.

Additionally, electronic wirings formed on an LED driving board 151 of the BLU 150-3 shown in FIG. 4 are different from those of the BLUs 150-1 and 150-2 of FIGS. 2 and 3.

The electronic wirings formed on the LED driving board 151 shown in FIG. 4 enable LEDs contained in the LED module 159-11, the LEDs contained in the LED module 159-12 and the LEDs contained in the LED module 159-21 to be connected to each other in series. The LEDs contained in the LED module 159-22, the LEDs contained in the LED module 159-31 and the LEDs contained in the LED module 159-32 to be connected to each other in series. Additionally, the electronic wirings shown in FIG. 4 enable the LEDs contained in the LED module 159-11, the LED module 159-12 and the LED module 159-21 to be connected in parallel to the LEDs contained in the LED module 159-22, the LED module 159-31 and the LED module 159-32.

Accordingly, it is possible to drive the six LED modules 159-11, 159-12, 159-21, 159-22, 159-31, 159-32, in series and/or parallel, with a single LED driving unit 153.

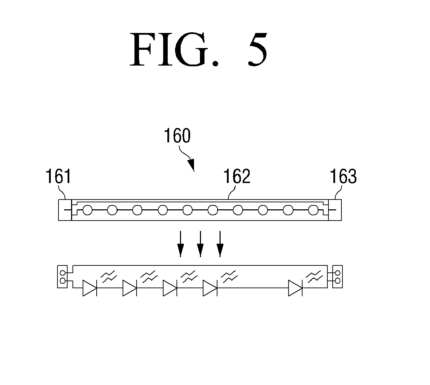

The top row of FIG. 5 exemplarily illustrates a type of an LED module 160 that is different from the above-described LED modules, and the bottom row of FIG. 5 is a circuit view of the LED module 160 shown in the top row.

The LED module 160 of FIG. 5 comprises a first terminal 161, an LED array 162 and a second terminal 163. The first terminal 161 and second terminal 163 are respectively disposed on both ends of the LED array 162 as shown in FIG. 5, and thus the LED module 160 differs from the LED modules shown in FIGS. 2 to 4 which comprise the driving terminals disposed on one end only.

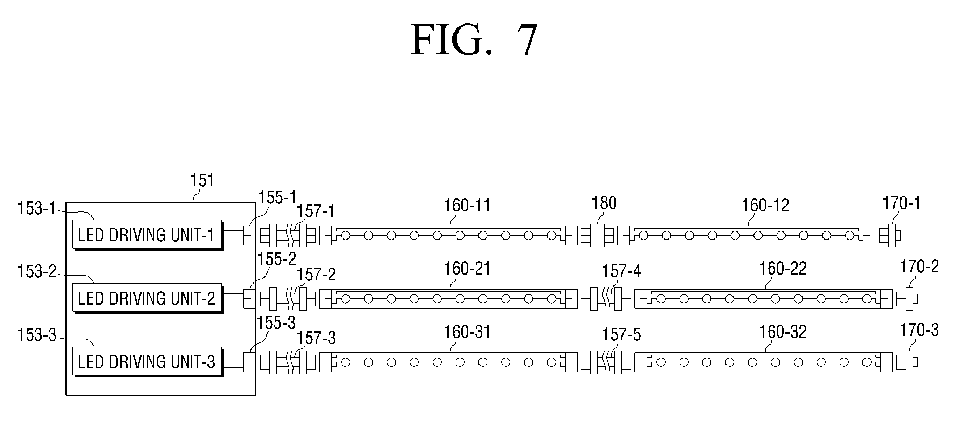

Since the LED array 162 comprises the first terminal 161 and second terminal 163 on both ends thereof, the LED module 160 may be connected to other LED modules in series. Thus, the LED module 160 differs from the LED modules shown in FIGS. 2 to 4. A process of connecting the LED module 160 in series to other LED modules will be described with reference to FIG. 7 below.

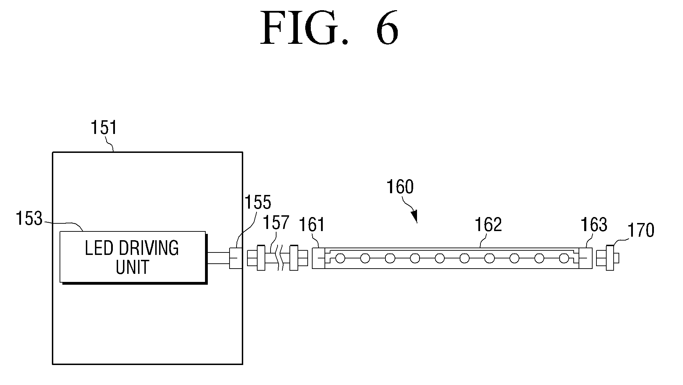

The LED module 160 may be used independently without being connected to any other LED module, and a process of independently using only the LED module 160 is now described with reference to FIG. 6. In FIG. 6, the first terminal 161 of the LED module 160 is connected to a driving terminal 155 via a connection cable 157, and in other words, is connected to an LED driving unit 153 in an LED driving board 151.

Additionally, the second terminal 163 of the LED module 160 is connected to a termination connector 170. The termination connector 170 may be detachably connected to either the first terminal 161 or the second terminal 163, but in the exemplary embodiment, the termination connector 170 is connected to the second terminal 163 because the first terminal 161 is connected to the connection cable 157.

The termination connector 170 short-circuits the second terminal 163 of the LED module 160. Additionally, the termination connector 170 enables LEDs arranged in the LED array 162 to be connected in series to the LED driving unit 153. Accordingly, the LED driving unit 153 may drive the LEDs contained in the LED module 160 in series.

As described above, a single LED driving unit drives a single LED module in the exemplary embodiment, but this is merely exemplary for convenience of description. The number of LED driving units and the number of LED modules may be changed as required, and a single LED driving unit may drive a plurality of LED modules in series and/or in parallel.

FIG. 7 illustrates a BLU according to an exemplary embodiment in which a single LED driving unit drives two LED modules. In FIG. 7, three LED driving units may drive six LED modules.

The BLU of FIG. 7 comprises an LED driving board 151, three LED driving units 153-1, 153-2, 153-3, three driving terminals 155-1, 155-2, 155-3, a connection connector 180, five connection cables 157-1, 157-2, 157-3, 157-4, 157-5, and six LED modules 160-11, 160-12, 160-21, 160-22, 160-31, 160-32.

Both ends of the connection connector 180 are detachably connected to the terminals of two LED modules 160-11 and 160-12, and thus the connection connector 180 may be used to connect the two LED modules 160-11 and 160-12 in series. As shown in FIG. 7, the left end of the connection connector 180 is connected to the LED module 160-11, and the right end is connected to the LED module 160-12. Accordingly, the LED module 160-11 and LED module 160-12 are connected in series through the connection connector 180.

Additionally, a first terminal of the LED module 160-11 is connected to the driving terminal 155-1 via the connection cable 157-1, and as a result is connected to the LED driving unit-1 153-1 in the LED driving board 151. Furthermore, a second terminal of the LED module 160-12 is connected to a termination connector 170-1.

Accordingly, LEDs contained in the LED module 160-11 and LEDs contained in the LED module 160-12 are connected in series to the LED driving unit-1 153-1. Therefore, the LED driving unit-1 153-1 may drive the LEDs in series.

The LED module 160-21 is connected in series to the LED module 160-22 through the connection cable 157-4. Additionally, a first terminal of the LED module 160-21 is connected to the driving terminal 155-2 via the connection cable 157-2, and as a result is connected to the LED driving unit-2 153-2 in the LED driving board 151. In addition, a second terminal of the LED module 160-22 is connected to a termination connector 170-2.

Accordingly, LEDs contained in the LED module 160-21 and LEDs contained in the LED module 160-22 are connected in series to the LED driving unit-2 153-2. Therefore, the LED driving unit-2 153-2 may drive the LEDs in series.

Likewise, the LED module 160-31 is connected in series to the LED module 160-32 through the connection cable 157-5. Additionally, a first terminal of the LED module 160-31 is connected to the driving terminal 155-3 via the connection cable 157-3, and as a result is connected to the LED driving unit-3 153-3. In addition, a second terminal of the LED module 160-32 is connected to a termination connector 170-3.

Accordingly, LEDs contained in the LED module 160-31 and LEDs contained in the LED module 160-32 are connected in series to the LED driving unit-3 153-3. Therefore, the LED driving unit-3 153-3 may drive the LEDs in series.

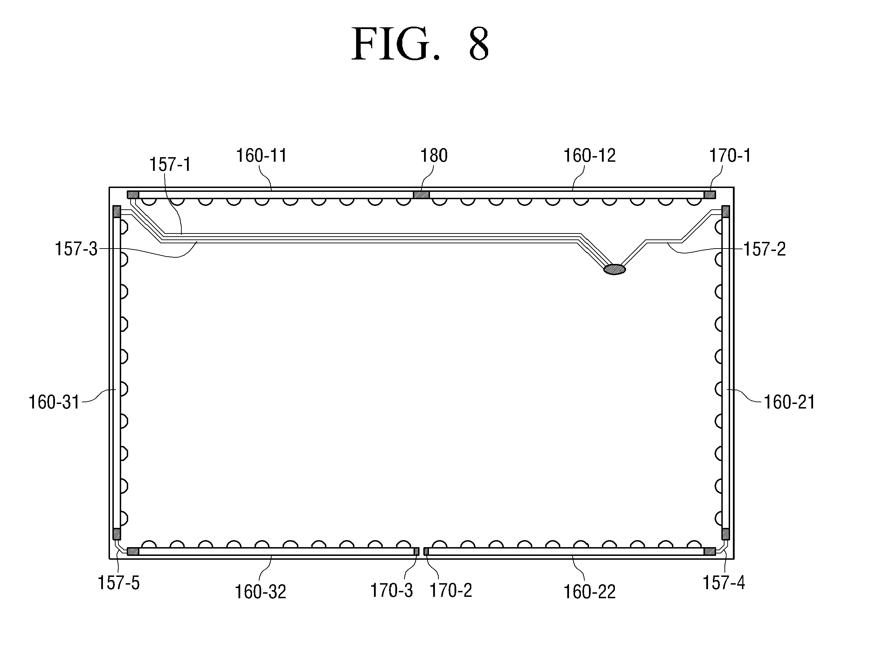

FIG. 8 is a view illustrating an exemplary display panel on which the BLU shown in FIG. 7 is disposed. In FIG. 8, the LED module 160-11 and LED module 160-12 are connected in series via an unbendable connection connector 180, and are arranged on an upper end of the display panel.

The LED module 160-21 and LED module 160-22 are connected via the connection cable 157-4, which is bendable, and are arranged on a right end and lower end of the display panel, respectively.

The LED module 160-31 and LED module 160-32 are connected via the connection cable 157-5, and are arranged on a left end and lower end of the display panel, respectively.

As shown in FIG. 8, the connection connector 180 may be used to arrange two LED modules in series, and the connection cables may be used to connect two LED modules perpendicular to each other.

Additionally, the connection cable my be replaced by a bent connection connector. In other words, the connection connector is divided into a linear type connector and a non-linear type connector. A non-linear type connector may be selected according to the shape of display panel.

While the LED modules are disposed outside the display panel in the exemplary embodiments, this is merely exemplary. Accordingly, the exemplary embodiments are also applicable to a situation in which LED modules are disposed on areas other than the outside of the display panel.

Additionally, two LED modules are connected through the connection connector in the exemplary embodiment, but this is merely exemplary for convenience of description. Accordingly, the exemplary embodiment is also applicable to a situation in which three LED modules are connected using two or more connection connectors.

In addition, the LED modules are connected to the driving terminals through the connection connector in the exemplary embodiment, but this is merely exemplary for convenience of description. Accordingly, the exemplary embodiments are also applicable to a situation in which LED modules are connected directly to the driving terminals.

Furthermore, the LCD described in the exemplary embodiments is an example of a display which requires backlight. Accordingly, the exemplary embodiments are also applicable to any displays requiring backlight.

Moreover, the exemplary embodiments are also applicable to not only apparatuses capable of displaying videos other than broadcasts, but also apparatuses comprising only BLUs or only light source modules.

As described above, according to the exemplary embodiments, it is possible to more easily and variously change a design of a BLU using a light module capable of being connected to other light source modules via a connector and a cable.

Additionally, it is possible to reduce the number of light source driving elements, and also possible to reduce the size of a board in which light source driving elements are to be installed. Therefore, it is possible to reduce manufacturing costs of the BLU and display apparatus.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display which displays a video; and
a backlight unit (BLU) which provides backlight to the display,
wherein the BLU comprises:
a first light source module in which a plurality of light sources are arranged;
a second light source module in which a plurality of light sources are arranged; and
a light source driving unit which drives the first light source module and second light source module,
wherein the first light source module and second light source module are connected to each other by a first connector.

2. The display apparatus as claimed in claim 1, wherein the first connector is detachably connected to the first light source module and second light source module.

3. The display apparatus as claimed in claim 1 or 2, wherein the plurality of light sources in the first light source module are connected in series to the plurality of light sources in the second light source module.

4. The display apparatus as claimed in claim 3, wherein a terminal on a first end of the first light source module is connected to the light source driving unit,
a terminal on a second end of the first light source module is connected to a first end of the second light source module via the first connector,
a terminal on a second end of the second light source module is short-circuited, so that the plurality of light sources in the first light source module are connected in series to the plurality of light sources in the second light source module.

5. The display apparatus as claimed in claim 4, further comprising:
a second connector which short-circuits terminals,
wherein the second connector is connected to the second end of the second light source module, to short-circuit the terminal on the second end of the second light source module.

6. The display apparatus as claimed in any one of claims 1 to 5, wherein the first connector is a linear type connector or a non-linear type connector.

7. The display apparatus as claimed in claim 6, wherein, if the first light source module and second light source module are not arranged in series, the first connector is a non-linear type connector.

8. The display apparatus as claimed in claim 6 or 7, wherein the first light source module is disposed outside the display apparatus.

9. The display apparatus as claimed in any one of claims 1 to 8, further comprising:
a third light source module in which a plurality of light sources are arranged,
wherein the second light source module and third light source module are connectable to each other by a third connector.

10. The display apparatus as claimed in any one of claims 1 to 9, wherein the plurality of light sources of the first and second light source modules comprise white light sources.

11. The display apparatus as claimed in any one of claims 1 to 10, wherein the light source driving unit is implemented with a single module.

12. The display apparatus as claimed in any one of claims 1 to 11, wherein the first connector physically and electrically connects the first light source module to the second light source module.

13. The display apparatus as claimed in any one of claims 1 to 12, wherein the first light source module and second light source module are connectable to each other via a cable.
